# EUROPÄISCHE PATENTSCHRIFT

(11) **EP 2 126 415 B1**
(45) Veröffentlichungstag und Bekanntmachung des Hinweises auf die Patenterteilung: **16.06.2010**
(21) Anmeldenummer: 08715825.9
(22) Anmeldetag: 18.02.2008
(51) Int. Cl.: F16H 57/04

(54) **LEITUNGSVORRICHTUNG UND BAUKASTENSYSTEM ZUM AUFBAU EINER LEITUNGSVORRICHTUNG**
CONDUIT DEVICE AND MODULAR SYSTEM FOR CONSTRUCTING A CONDUIT DEVICE
SYSTEME DE CONDUITE ET SYSTEME MODULAIRE PERMETTANT L'ASSEMBLAGE D'UN TEL SYSTEME DE CONDUITE

(30) Priorität: 20.02.2007 DE 102007008644
(43) Veröffentlichungstag der Anmeldung: 02.12.2009
(73) Patentinhaber: Walter Söhner GmbH & Co. KG Präzisionskunststoffteile, 74193 Schwaigern (DE)
(72) Erfinder: ZÖLLER, Rolf, 74336 Brackenheim (DE)
(74) Vertreter: Witte, Weller & Partner
(86) Internationale Anmeldenummer: PCT/EP2008/001225
(87) Internationale Veröffentlichungsnummer: WO 2008/101645

(56) Entgegenhaltungen:
- DE-A1- 3 937 645
- DE-A1- 19 636 841
- DE-A1-102005 005 154
- GB-A- 2 427 450
- US-A- 5 251 725

## Beschreibung

Die vorliegende Erfindung betrifft eine Leitungsvorrichtung zur Führung eines Kühl- oder Schmiermediums in einem Getriebe oder einem Motor, vorzugsweise in einem Fahrzeug, mit einer Leitung zur Führung eines Mediums und zumindest einer Austrittsöffnung zum Ausleiten des Mediums aus der Leitung, beansprucht im Anspruch 1. Ferner betrifft die Erfindung ein Baukastensystem zum Aufbau einer solchen Leitungsvorrichtung, beansprucht im Anspruch 11.

Leitungsvorrichtungen der vorgenannten Art sind allgemein bekannt. Sie werden beispielsweise in Getrieben mit Trockensumpfschmierung eingesetzt. Die Druckschrift DE 10 2005 005 154 A1, die als nächstliegender Stand der Technik angesehen wird, zeigt beispielsweise ein solches Getriebe. Allgemein zeichnen sich Getriebe mit Trockensumpfschmierung dadurch aus, dass die Getrieberäder nicht in das Getriebeöl, mit dem der Bodenbereich des Getriebegehäuses befüllt ist, eintauchen. Die Schmierung der Zahnräder, Lager etc. erfolgt über einen separaten Schmierölkreislauf. Üblicherweise ist in dem Getriebegehäuse eine Getriebeölpumpe vorgesehen, die Getriebeöl aus dem Ölsumpf ansaugt und zu Spritzdüsen bzw. Beölungsbohrungen fördert, über welche die Zahnräder, Lager etc. geölt werden. Zur Führung des Getriebeöls zu den Spritzdüsen bzw. Beölungsbohrungen ist eine Leitungsvorrichtung innerhalb des Getriebegehäuses vorgesehen, die über entsprechende Leitungsabschnitte das Öl zu den gewünschten Orten führt.

Aufgrund der zunehmenden Komplexität moderner Getriebe, insbesondere im Bereich von Doppelkupplungsgetrieben, steigt auch die Komplexität der Leitungsvorrichturig, da Getriebeöl an sehr viel mehr Stellen innerhalb des Getriebegehäuses geführt werden muss. Insbesondere bei Doppelkupplungsgetrieben ist die Anzahl der zu schmierenden Zahnräder deutlich erhöht gegenüber den normalen Getrieben.

Die bisher eingesetzten Leitungsvorrichtungen sind aus Metall gefertigt und jeweils an den jeweiligen Getriebetyp angepasst, indem beispielsweise Metallrohre passend gebogen werden.

Da gerade in der Automobilindustrie der Kostendruck sehr hoch ist, besteht der Wunsch, kostengünstigere Systeme zu schaffen, die einerseits bei der Fertigung Kostenvorteile bringen als auch andererseits beim Einbau in der Produktion.

Vor diesem Hintergrund besteht die Aufgabe der vorliegenden Erfindung darin, eine Leitungsvorrichtung der vorgenannten Art so weiterzubilden, dass die Herstellungskosten verringert werden und der Einbau erleichtert wird.

Diese Aufgabe wird bei der vorgenannten Leitungsvorrichtung dadurch gelöst, dass die Leitung aus mehreren standardisierten Leitungsstücken zusammengesetzt ist, zumindest ein Leitungsstück ein Leitungsstück mit Austrittsöffnung ist und die Leitungsstücke aus einem Kunststoff hergestellt sind.

Das heißt mit anderen Worten, dass die Leitungsvorrichtung nicht - wie bisher - aus einem oder einigen wenigen an den Anwendungsfall angepassten Leitungselementen aufgebaut wird, sondern dass die Leitungsvorrichtung aus einer Vielzahl von standardisierten Leitungsstücken in der jeweils gewünschten Geometrie zusammengesetzt ist. Die Leitungsstücke sind hinsichtlich ihrer Anschlussbereiche standardisiert, so dass ein beliebiges Leitungsstück in ein anderes beliebiges Leitungsstück einsetzbar ist. Die Leitungsstücke selbst sind ebenfalls standardisiert, d.h. es gibt beispielsweise gerade Leitungsstücke unterschiedlicher Länge, Winkel-Leitungsstücke mit unterschiedlichen Winkeln, Abschluss-Leitungsstücke und Leitungsstücke mit Austrittsöffnungen sowie T-Leitungsstücke.

Der Vorteil liegt u.a. darin, dass beliebige Leitungsgeometrien mit den standardisierten Leitungsstücken aufgebaut werden können. Das bedeutet bei der Herstellung, dass die Werkzeuge zur Herstellung der Leitungsstücke länger eingesetzt werden können, selbst wenn eine Leitungsgeometrie geändert wird. Dies führt zu deutlichen Kosteneinsparungen.

Darüber hinaus ist es möglich, die aus einzelnen Leitungsstücken aufgebaute Leitungsvorrichtung in zwei oder mehreren Teilabschnitten auszuliefern, und den Endzusammenbau erst beim Einsetzen in das Getriebe vorzunehmen. Das kann - abhängig von der Geometrie des Getriebegehäuses - den Einbau deutlich vereinfachen.

Ein weiterer Vorteil der erfindungsgemäßen Leitungsvorrichtung ist darin zu sehen, dass die Leitungsstücke aus Kunststoff hergestellt werden. Der eingesetzte Kunststoff hat nicht nur Gewichtsvorteile, sondern ist kostengünstiger, so dass die Leitungsvorrichtung insgesamt einen deutlichen Kostenvorteil bringt.

Darüber hinaus lässt sich Kunststoff - im Vergleich zu Metall - besser verarbeiten, so dass auch kompliziertere Geometrien der einzelnen Leitungsstücke einfach fertigbar sind.

In einer bevorzugten Weiterbildung wird als Kunststoff Polyamid eingesetzt.

Diese Maßnahme hat den Vorteil, dass sich Polyamid in Umgebungen mit großen Temperaturunterschieden sehr gut eignet. Dies ist besonders wichtig beim Einsatz in Getriebegehäusen, wo die Temperaturschwankungen sehr groß sein können.

Zur Verbindung zweier Leitungsstücke sind unterschiedliche Lösungen denkbar, wobei sich besonders bevorzugt eine Steckverbindung einsetzen lässt. Um solche Steckverbindungen zu ermöglichen, weist jedes Leitungsstück einen männlichen und einen weiblichen Abschnitt auf, so dass die Leitungsstücke beliebig miteinander verbindbar sind. Vorzugsweise wird die Verbindung über Rastelemente gesichert, die entweder außerhalb oder innerhalb der Leitungsstücke vorgesehen sein können.

Weiter bevorzugt weisen die männlichen und weiblichen Verbindungsabschnitte Verzahnungen auf, die zueinander passen und eine Verdrehsicherung liefern.

Selbstverständlich sind auch andere Verbindungsmöglichkeiten zwischen Leitungsstücken denkbar, beispielsweise Ultraschallschweißen oder Verkleben.

Die der Erfindung zugrunde liegende Aufgabe wird auch von einem Baukastensystem zum Aufbau einer Leitungsvorrichtung, wie sie zuvor beschrieben wurden, gelöst. Das Baukastensystem umfasst mehrere gerade Leitungsstücke unterschiedlicher Länge, mehrere Winkel-Leitungsstücke, die unterschiedliche Biegungen aufweisen, zumindest ein Leitungsstück mit einer Austrittsöffnung, zumindest ein Anschluss-Leitungsstück und zumindest einem End-Leitungsstück, das die Leitungsvorrichtung in Längsrichtung abschließt, wobei die Leitungsstücke an ihren Enden Verbindungsabschnitte aufweisen, die standardisiert sind und derart ausgebildet sind, dass beliebige Leitungsstücke ineinander steckbar und miteinander verbindbar sind, und wobei die Leitungsstücke aus einem Kunststoff hergestellt sind.

Mit Hilfe dieses Baukastensystems lassen sich Leitungsvorrichtungen unterschiedlichster Geometrie aufbauen, ohne eine speziell zugeschnittene Leitungsvorrichtung extra fertigen zu müssen. Die Vorteile eines solchen Baukastensystems sind vielfältig und wurden zuvor bereits beschrieben.

Ein wesentlicher Vorteil ist darin zu sehen, dass die einzelnen standardisierten Leitungsstücke in großen Stückzahlen gefertigt werden können, ohne dass sie einer bestehenden Geometrie zugeordnet wären. Sie können vielmehr für den Aufbau unterschiedlichster Leitungsgeometrien eingesetzt werden.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Figuren näher erläutert. Dabei zeigen:
- Fig. 1: eine schematische Darstellung einer erfindungsgemäßen Leitungsvorrichtung mit entsprechender Benennung der einzelnen Leitungsstücke;
- Fig. 2: eine schematische Darstellung der Leitungsvorrichtung von Fig. 1 in einer anderen perspektivischen Darstellung;
- Fig. 3a b,: ein Leitungsstück mit verzahnten Endabschnitten;
- Fig. 4: eine schematische Darstellung zweier miteinander verbundenen Leitungsstücken;
- Fig. 5: ein Leitungsstück mit Austrittsöffnung in perspektivischer Darstellung; und
- Fig. 6: eine Schnittdarstellung zweier miteinander verbundenen Leitungsstücken.

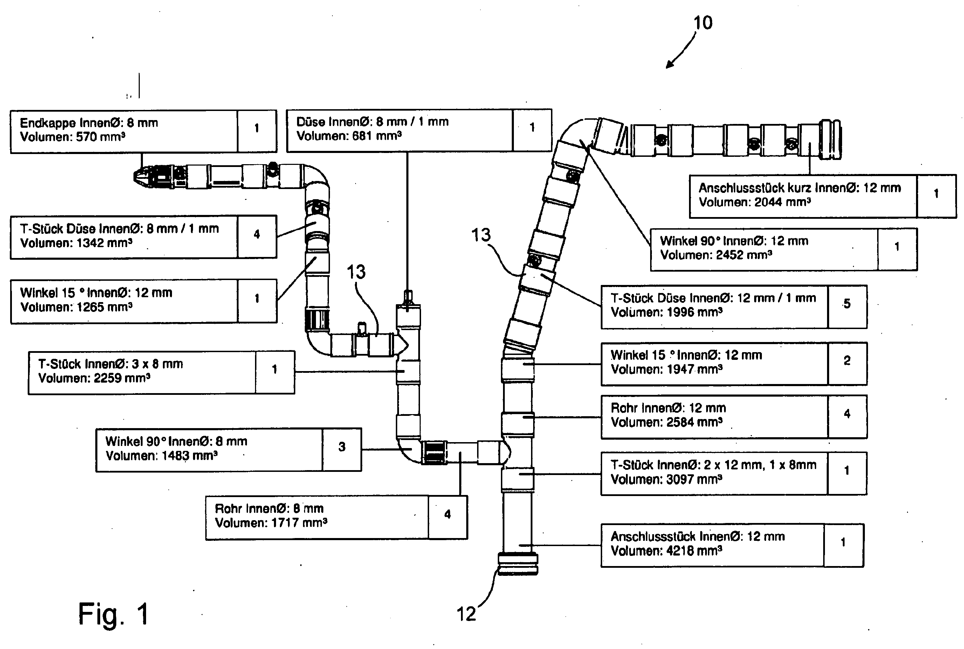

In Fig. 1 ist eine erfindungsgemäße Leitungsvorrichtung in schematischer Darstellung gezeigt und mit dem Bezugszeichen 10 gekennzeichnet. Die gezeigte Leitungsvorrichtung 10 besitzt eine bestimmte Geometrie, die jedoch rein beispielhaft ist. Es versteht sich, dass die Leitungsvorrichtung 10 jede beliebige Geometrie aufweisen kann. Die Geometrie wird alleine nach dem Anwendungsfall gewählt.

Die Leitungsvorrichtung 10 kommt in einem Getriebegehäuse zum Einsatz, um Öl aus einem Ölreservoir zu den gewünschten Stellen zu fördern. Es versteht sich jedoch, dass die Leitungsvorrichtung 10 auch für andere Zwecke eingesetzt werden kann.

Die Leitungsvorrichtung 10 ist aus einer Vielzahl von unterschiedlichen Leitungsstücken zusammengebaut, die in Fig. 1 jeweils mit Name, Durchmesser und Volumen beschriftet sind. Darüber hinaus ist in der Beschriftung in der zweiten Spalte jeder Beschriftung angegeben, wie oft dieser Typ von Leitungsstück in der Leitungsvorrichtung 10 verbaut ist. So kommt beispielsweise das mit dem Bezugszeichen 13 gekennzeichnete Leitungsstück, das als T-Stück mit Düse ausgebildet ist, insgesamt fünfmal in der Leitungsvorrichtung 10. vor.

Aus der Darstellung in Fig. 1 ist erkennbar, dass es neben geraden Rohrleitungsstücken auch Winkel-Leitungsstücke, T-Leitungsstücke, Anschluss-Leitungsstücke, Endkappen-Leitungsstücke sowie Düsen- und T-Düsen-Leitungsstücke gibt. Aus diesen Grund-Leitungstypen lassen sich unterschiedlichste Geometrien einer Leitungsvorrichtung 10 aufbauen.

Die Leitungsstücke selbst sind aus einem Kunststoff, insbesondere Polyamid, hergestellt, beispielsweise durch Spritzgießverfahren. Selbstverständlich ist es denkbar, die Leitungsstücke 12 aus einem anderen Material herzustellen, allerdings ist Kunststoff, insbesondere Polyamid, unter Kostengesichtspunkten vorteilhaft.

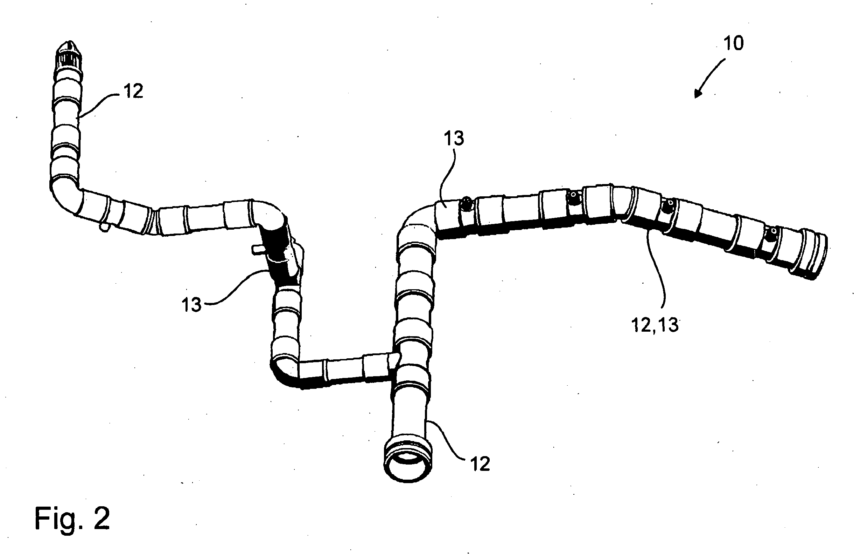

In Fig. 2 ist die Leitungsvorrichtung 10 von Fig. 1 nochmals aus einer anderen Perspektive dargestellt. Sehr deutlich sind die T-Düsen-Leitungsstücke 13 zu erkennen, die jeweils eine zur Seite gehende Austrittsöffnung besitzen. Über diese Austrittsöffnung kann das von der Leitungsvorrichtung 10 geführte Medium, nämlich beispielsweise Getriebeöl, an eine bestimmte Stelle gebracht werden.

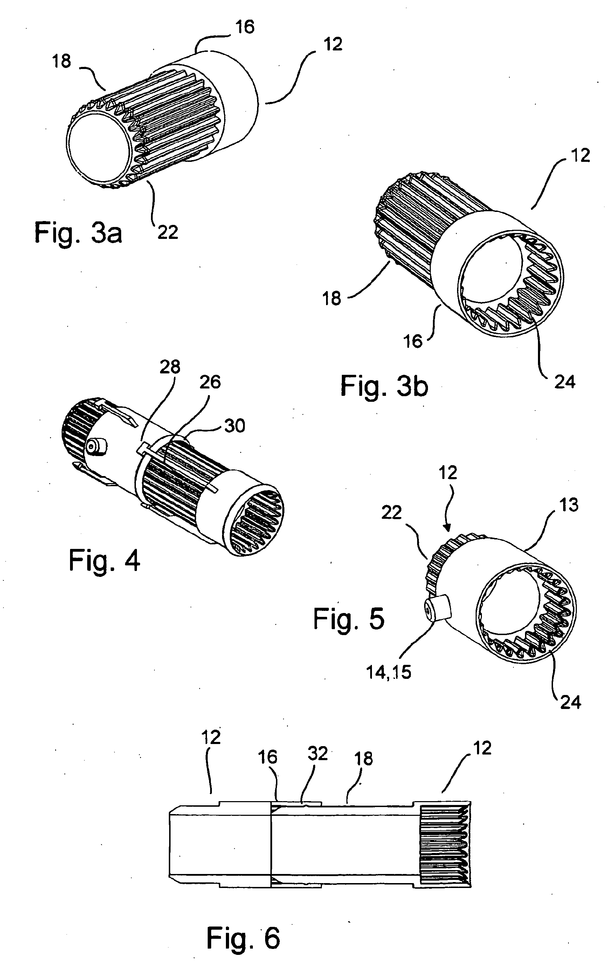

Die Verbindung der einzelnen Leitungsstücke erfolgt durch Ineinanderstecken, wobei hierfür jedes Leitungsstück einen männlichen und einen weiblichen Endabschnitt aufweist. Mit Bezug auf die Fig. 3a und 3b soll dies nachfolgend kurz erläutert werden.

Das in Fig. 3a gezeigte Leitungsstück 12 weist einen ersten Endabschnitt 16 auf, der als weiblicher Abschnitt dient, und einen zweiten Endabschnitt 18, der als männlicher Endabschnitt dient. Der Innendurchmesser des weiblichen Endabschnitts entspricht dabei dem Außendurchmesser des männlichen Endabschnitts 18. Diese Konfiguration der jeweiligen Enden jedes Leitungsstücks 12 ist standardisiert, d.h. bei allen unterschiedlichen Leitungsstücken gleich ausgebildet. Damit wird gewährleistet, dass verschiedene Leitungsstücke beliebig miteinander verbunden werden können.

Um eine Verdrehsicherung zwischen zwei miteinander verbundenen, d.h. ineinander gesteckten Leitungsstücken 12 zu gewährleisten, weisen die beiden Endabschnitte 16, 18 eine Verzahnung auf. So besitzt der weibliche Endabschnitt 16 eine Innenverzahnung 24 und der männliche Endabschnitt 18 eine Außenverzahnung 22. Werden nun zwei Leitungsstücke 12 ineinander gesteckt, wirken Innen- und Außenverzahnung zusammen und sorgen dafür, dass die beiden Leitungsstücke 12 nicht mehr relativ zueinander verdrehbar sind.

Selbstverständlich sind auch andere Lösungen denkbar, um eine Drehsicherung zu erreichen. Im einfachsten Fall werden zwei ineinander gesteckte Leitungsstücke ohne Verzahnung miteinander verklebt oder beispielsweise durch Ultraschallschweißen zusammengefügt.

Um zu verhindern, dass zwei ineinander gesteckte Leitungsstücke 12 sich wieder voneinander lösen, sind beispielsweise Rastelemente vorgesehen, die im eingesteckten Zustand miteinander verrasten und die Leitungsstücke 12 so in Längsrichtung sichern.

In Fig. 4 ist beispielsweise eine Lösung eines Rastmechanismus schematisch dargestellt. Der Rastmechanismus umfasst hierbei mehrere Arme 26, die sich an der Außenseite eines Leitungsstücks 12 entlang des männlichen Endabschnitts 18 zum Ende hin erstrecken und an ihrem Ende ein Rastelement 28 aufweisen. Dieses Rastelement 28 ist in radialer Richtung flexibel und kann deshalb beim Einstecken des Leitungsstücks in ein anderes Leitungsstück über einen Rand 30 des anderen Leitungsstücks gleiten und sich dahinter an einer entsprechenden Stufe einrasten. Durch diese Art von Rastmechanismus wird das Leitungsstück gegen ein Lösen aus dem anderen Leitungsstück gesichert. Die Anzahl der in Umfangsrichtung gleichmäßig beabstandeten Arme 26 hängt vom jeweiligen Anwendungszweck ab, wobei üblicherweise drei bzw. vier Arme 26 mit entsprechenden Rastelementen 28 ausreichen, um eine sichere Verbindung zu gewährleisten.

Eine andere Art eines Rastmechanismus ist in Fig. 6 schematisch dargestellt. Bei dieser Lösung weist der männliche Endabschnitt 18 eines Leitungsstücks 12 eine oder mehrere Nasen 32 auf, die sich in radialer Richtung erstrecken und mit entsprechend vorgesehenen Vertiefungen im weiblichen Endabschnitt 16 des anderen Leitungsstücks 12 zusammen wirken können. Wird das Leitungsstück 12 in das andere Leitungsstück 12 eingesteckt, verrasten die Nasen 32 in einer bestimmten Längsposition des Leitungsstücks 12 in den Vertiefungen und halten damit die beiden miteinander verbundenen Leitungsstücke zusammen.

Selbstverständlich sind auch andere Rastmechanismen denkbar.

In Fig. 5 ist schließlich ein einzelnes Leitungsstück 12 dargestellt, das eine Austrittsöffnung 14 aufweist, die sich in radialer Richtung erstreckt. Die Austrittsöffnung 14 ist durch ihre Geometrie als Düse 15 ausgebildet. Durch diese Düse 15 kann ein Teil des im Leitungsstück 12 geführten Mediums nach außen gelangen.

Auch dieses Düsen-Leitungsstück 13 besitzt die beiden bereits erwähnten Endabschnitte 16 und 18 mit einer Außenverzahnung 22 bzw. einer Innenverzahnung 24, um auf diese Weise das Düsen-Leitungsstück 13 drehfest mit einem benachbarten Leitungsstück 12 zu verbinden. Durch die verdrehsichere Verbindung wird gewährleistet, dass die Düse 15 genau in die gewünschte Richtung zeigt.

Da die drehsichere Verbindung zwischen zwei Leitungsstücken 12 nicht für jedes Leitungsstück von Bedeutung ist, können einzelne Leitungsstück-Typen auch ohne Verzahnung ausgebildet sein.

Dadurch, dass die Leitungsstücke 12 hinsichtlich ihrer Endabschnitte zur Verbindung miteinander standardisiert sind, lässt sich ein Baukastensystem von unterschiedlichen Typen von Leitungsstücken aufbauen. Dieses Baukastensystem kann gerade Rohr-Leitungsstücke unterschiedlicher Länge umfassen, Winkel-Leitungsstücke mit unterschiedlich abgestuften Winkeln beispielsweise 15°, 45°, 90°, Endkappen-Leitungsstücke zum Abschließen von Leitungen, sowie T-Leitungsstücke und Düsen-Leitungsstücke. Aus diesem Fundus von unterschiedlichen Leitungsstücken lässt sich nahezu jede Leitungsgeometrie 10 aufbauen, so dass keine an den jeweiligen Anwendungsfall angepassten Maschinen zum Biegen von Rohren etc. erforderlich werden. Das Baukastensystem erleichtert folglich nicht nur ein schnelles Prototyping, sondern spart auch Kosten, da die Werkzeuge für die einzelnen Leitungsstücke für die unterschiedlichsten Leitungsgeometrien eingesetzt werden können.

## Patentansprüche

1. Leitungsvorrichtung zur Führung eines Kühl- oder Schmiermediums in einem Getriebe oder einem Motor, vorzugsweise in einem Fahrzeug, mit einer Leitung zur Führung eines Mediums, und zumindest einer Austrittsöffnung zum Ausleiten des Mediums aus der Leitung, **dadurch gekennzeichnet, dass**
- die Leitung aus mehreren standardisierten Leitungsstücken (12) zusammengesetzt ist,
- zumindest ein Leitungsstück (12) ein Leitungsstück mit Austrittsöffnung (14) ist, und
- die Leitungsstücke (12) aus einem Kunststoff hergestellt sind.

2. Leitungsvorrichtung nach Anspruch 1, **dadurch gekennzeichnet, dass** der Kunststoff Polyamid ist.

3. Leitungsvorrichtung nach Anspruch 1 oder 2, **dadurch gekennzeichnet, dass** zumindest ein Leitungsstück (12) als T-Stück ausgebildet ist.

4. Leitungsvorrichtung nach Anspruch 1, 2 oder 3, **dadurch gekennzeichnet, dass** zumindest ein Leitungsstück (12) als Winkel-Stück ausgebildet ist.

5. Leitungsvorrichtung nach einem der vorhergehenden Ansprüche, **dadurch gekennzeichnet, dass** zumindest ein Leitungsstück (12) als gerades Rohr-Stück ausgebildet ist.

6. Leitungsvorrichtung nach einem der vorhergehenden Ansprüche, **dadurch gekennzeichnet, dass** zumindest ein Leitungsstück (12) als Anschlussstück ausgebildet ist.

7. Leitungsvorrichtung nach einem der vorhergehenden Ansprüche, **dadurch gekennzeichnet, dass** jedes Leitungsstück (12) einen ersten Längsabschnitt (18) zum Einstecken in ein benachbartes Leitungsstück und einen zweiten Längsabschnitt (16) zur Aufnahme eines Abschnitts eines benachbarten Leitungsstücks aufweist.

8. Leitungsvorrichtung nach Anspruch 7, **dadurch gekennzeichnet, dass** die beiden Längsabschnitte (16, 18) eine Verzahnung (22, 24) aufweisen, um beim Ineinanderstecken zweier Leitungsstücke (12) eine Verdrehsicherung zu erzielen.

9. Leitungsvorrichtung nach Anspruch 7, **dadurch gekennzeichnet, dass** benachbarte Leitungsstücke (12) durch Schweißen, insbesondere Ultraschallschweißen miteinander verbunden werden.

10. Leitungsvorrichtung nach Anspruch 7, **dadurch gekennzeichnet, dass** benachbarte Leitungsstücke miteinander verklebt werden.

11. Baukastensystem zum Aufbau einer Leitungsvorrichtung zur Einspritzschmierung, insbesondere nach einem der Ansprüche 1 bis 10, mit
- mehrere geraden Leitungsstücken (12) unterschiedlicher Länge,
- mehreren Winkel-Leitungsstücken, die unterschiedliche Biegungen aufweisen,
- zumindest einem Leitungsstück (12, 13) mit einer Austrittsöffnung (14),
- zumindest einem Anschluss-Leitungsstück, und
- zumindest einem End-Leitungsstück, dass die Leitungsvorrichtung in Längsrichtung abschließt,
wobei die Leitungsstücke (12) an ihren Enden Verbindungsabschnitte (16, 18) aufweisen, die standardisiert sind und derart ausgebildet sind, dass beliebige Leitungsstücke ineinandersteckbar und miteinander verbindbar sind, und wobei die Leitungsstücke aus einem Kunststoff hergestellt sind.

## Claims

1. A piping apparatus for carrying a cooling or lubricating medium in a transmission or an engine, preferably in a vehicle, with a pipe for carrying a medium and at least one outlet opening for conducting the medium out of the pipe,
**characterized in that**
- the piping comprises multiple standardized piping elements (12),
- at least one piping element (12) is a piping element having an outlet opening (14), and
- the piping elements (12) are made from a plastic.

2. The piping apparatus as claimed in claim 1, **characterized in that** the plastic is polyamide.

3. The piping apparatus as claimed in claim 1 or 2, **characterized in that** at least one piping element (12) is embodied as a T-element.

4. The piping apparatus as claimed in claim 1, 2 or 3, **characterized in that** at least one piping element (12) is embodied as an angle element.

5. The piping apparatus as claimed in one of the preceding claims, **characterized in that** at least one piping element (12) is embodied as a straight tubular element.

6. The piping apparatus as claimed in one of the preceding claims, **characterized in that** at least one piping element (12) is embodied as connection element.

7. The piping apparatus as claimed in one of the preceding claims, **characterized in that** each piping element (12) has a first longitudinal section (18) for fitting into an adjacent piping element and a second longitudinal section (16) for receiving a section of an adjacent piping element.

8. The piping apparatus as claimed in claim 7, **characterized in that** the two longitudinal sections (16, 18) have a tooth system (22, 24), in order to afford a safeguard against torsion when fitting two piping elements (12) together.

9. The piping apparatus as claimed in claim 7, **characterized in that** adjacent piping elements (12) are connected together by welding, in particular ultrasonic welding.

10. The piping apparatus as claimed in claim 7, **characterized in that** adjacent piping elements are adhesively bonded together.

11. A modular system for the construction of a piping apparatus for injection lubrication, in particular as claimed in one of claims 1 to 10, comprising
- multiple straight piping elements (12) of different length,
- multiple angle piping elements having various bends, .
- at least one piping element (12, 13) having an outlet opening (14),
- at least one connection piping element, and
- at least one end piping element, which terminates the piping apparatus in a longitudinal direction,
the piping elements (12) at their ends having connecting sections (16, 18), which are standardized and are designed in such a way that any piping elements desired can be fitted into one another and connected together, and the piping elements being made from a plastic.

## Revendications

1. Dispositif de conduite pour guider un fluide de refroidissement ou de lubrification dans une boîte de vitesses ou un moteur, de préférence dans un véhicule, comprenant une conduite pour guider un fluide, et au moins une ouverture de sortie pour guider le fluide hors de la conduite, **caractérisé en ce que**
- la conduite est constituée de plusieurs sections de conduite standardisées (12),
- au moins une section de conduite (12) est une section de conduite avec l'ouverture de sortie (14), et
- les sections de conduite (12) sont fabriquées en matière plastique.

2. Dispositif de conduite selon la revendication 1, **caractérisé en ce que** la matière plastique est du polyamide.

3. Dispositif de conduite selon la revendication 1 ou 2, **caractérisé en ce qu'**au moins une section de conduite (12) est réalisée sous forme de section en T.

4. Dispositif de conduite selon la revendication 1, 2, ou 3, **caractérisé en ce qu'**au moins une section de conduite (12) est réalisée sous forme de section coudée.

5. Dispositif de conduite selon l'une quelconque des revendications précédentes, **caractérisé en ce qu'**au moins une section de conduite (12) est réalisée sous forme de section de tube droite.

6. Dispositif de conduite selon l'une quelconque des revendications précédentes, **caractérisé en ce qu'**au moins une section de conduite (12) est réalisée sous forme de section de raccord.

7. Dispositif de conduite selon l'une quelconque des revendications précédentes, **caractérisé en ce que** chaque section de conduite (12) présente une portion longitudinale (18) pour l'insertion dans une section de conduite adjacente et une deuxième portion longitudinale (16) pour recevoir une portion d'une section de conduite adjacente.

8. Dispositif de conduite selon la revendication 7, **caractérisé en ce que** les deux portions de conduite (16, 18) présentent une denture (22, 24) afin de produire, lors de l'insertion l'une dans l'autre de deux sections de conduite (12), une fixation contre la rotation.

9. Dispositif de conduite selon la revendication 7, **caractérisé en ce que** des sections de conduite adjacentes (12) sont connectées les unes aux autres par soudage, notamment par soudage aux ultrasons.

10. Dispositif de conduite selon la revendication 7, **caractérisé en ce que** des sections de conduite adjacentes sont collées ensemble.

11. Système modulaire pour la construction d'un dispositif de conduite pour la lubrification par pulvérisation, notamment selon l'une quelconque des revendications 1 à 10, comprenant :
- plusieurs sections de conduite droites (12) de longueurs différentes,
- plusieurs sections de conduite coudées qui présentent des courbures différentes,
- au moins une section de conduite (12, 13) avec une ouverture de sortie (14),
- au moins une section de conduite de raccord, et
- au moins une section de conduite d'extrémité, qui ferme le dispositif de conduite dans la direction longitudinale,
les sections de conduite (12) présentant à leurs extrémités des portions de connexion (16, 18) qui sont standardisées et qui sont réalisées de telle sorte que des sections de conduite quelconques puissent être enfichées les unes dans les autres et connectées les unes aux autres, les sections de conduites étant fabriquées en matière plastique.
